# EUROPEAN PATENT SPECIFICATION

(11) **EP 3 462 041 B1**
(45) Date of publication and mention of the grant of the patent: **07.06.2023**
(21) Application number: 18000775.9
(22) Date of filing: 28.09.2018
(51) Int. Cl.: F15B 13/08

(54) **VALVE MANIFOLD CIRCUIT BOARD WITH SERIAL COMMUNICATION AND CONTROL CIRCUIT LINE**
VENTILVERTEILERLEITERPLATTE MIT SERIELLER KOMMUNIKATION UND STEUERSCHALTUNGSLEITUNG
CARTE DE CIRCUIT IMPRIMÉ DE COLLECTEUR DE SOUPAPE À LIGNE DE COMMUNICATION ET DE CIRCUIT DE COMMANDE DE SÉRIE

(30) Priority: 29.09.2017 US 201715720535
(43) Date of publication of application: 03.04.2019
(73) Proprietor: Asco, L.P., Novi, MI 48377 (US)
(72) Inventor: DE CAROLIS, Enrico, Oakland Township, MI 48306 (US); HERIOT, Scott, Phoenix, AZ 85023 (US); GRISSOM, Brian, Phoenix, AZ 85053 (US)
(74) Representative: Oppermann, Mark

(56) References cited:
- EP-A1- 1 043 527
- WO-A1-2014/143002

## Description

### TECHNICAL FIELD

The field of this invention relates to a fluid control system according to claim 1. In particular it relates to a single line communication path between a driver and slave device, for example a solenoid actuated fluid control valve manifold assembly and a proportioning valve and more particularly to a multi-station circuit board for use with the manifold assembly having a single communication and control line.

### BACKGROUND OF THE DISCLOSURE

Fluid control systems for controlling flow of hydraulic or pneumatic fluid have been used in automated manufacturing equipment, production lines and numerous industrial applications. Many of these fluid control systems take the form of a valve manifold that has a series of manifold members assembled together. Each manifold member commonly includes a manifold valve block and a control valve mounted thereon. The control valve may have a solenoid that actuates the valve and has a spring return for moving the valve when the solenoid is deactuated. Other control valves use a double (or dual) solenoid valve that has a first solenoid when actuated that moves the valve to the on position and a second solenoid when actuated that moves the valve to the off position.

Each manifold block houses a circuit board which has circuitry printed thereon to allow actuation of the control valve mounted to the manifold block. The circuit board also has circuits printed thereon to carry voltage to other circuit boards for the other control valves mounted on other manifold blocks.

The number of circuit boards connected together are usually limited by either the capacity of the driver in the communication module or the inherent design of the individual circuit boards. However, an expansion module with its own driver can be placed at the end of the first series of circuit boards to drive a second series of circuit boards and control valve thereby increasing the capacity of the valve manifold.

A related fluid control system is known from document WO 2014/143002 A1.

Further, document EP 1 043 527 A1 discloses a manifold solenoid valve that is drive-controlled by serial signals which are transmitted to solenoid valves through interconnected manifold blocks on which the solenoid valves are mounted. In this prior art a control system is provided which is simply switched to operate either a single valve or a double valve. A printed circuit board is detachably accommodated in an electric circuit section of each manifold block. The printed circuit board has connecting terminals for transmitting serial signals, a slave chip for deriving operation signals for the solenoid valves from the serial signals, a feeder terminal for supplying power to the solenoid valves based on the operation signals, and a switching device for switching the slave chip between a single solenoid valve mode and a double solenoid valve mode. Connecting adjacent manifold blocks enables communication of common passages for supply and exhaust that penetrate the manifold blocks and also enables the connecting terminals to be interconnected.

What is needed is a single control line through the first series of circuit boards that controls a second driver to control at least one proportional valve and other field devices by providing a variable output based on the variable input voltage.

### SUMMARY OF THE DISCLOSURE

The above object is fulfilled by the features indicated in claim 1. An advantageous or expedient development of the invention is the subject matter of claim 2.

In accordance with the invention, a fluid control system includes a first fluid valve manifold with a plurality of valve manifold blocks fastened to each other so as to form fluid pathways extending through the first fluid valve manifold and a passage through each valve manifold block of the first fluid valve manifold that aligns with each other to collectively form a continuous electrical conduit receiving a first series of connected circuit boards that each actuate a respective valve unit mounted to each valve manifold block of the first fluid valve manifold. The fluid control system further includes a second fluid valve manifold with a plurality of valve manifold blocks fastened to each other so as to form fluid pathways extending through the second fluid valve manifold and a passage through each valve manifold block of the second fluid valve manifold that aligns with each other to collectively form a continuous electrical conduit receiving a second series of connected circuit boards that each actuate a respective valve unit mounted to each valve manifold block of the second fluid valve manifold. Each circuit board has a set of conductive valve lines connected to and extending between a respective set of first electrical connectors at a first edge thereof and a respective set of second mating electrical connectors at a second edge thereof opposite from the first edge. A first communication module having a first valve driver with a plurality of outputs actuates the respective valve units connected to the first series of connected circuit boards. A conductive common line is connected to one voltage side of a respective first electrical connector and respective second mating electrical connector for connection to a respective conductive common line in another valve manifold block.

Further, there is provided a second communication module having a second valve driver with a plurality of outputs for actuating the respective valve units connected to the second series of connected circuit boards. While the first series of connected circuit boards is operably connected to the first valve driver, the second valve driver is connected to the second series of connected circuit boards. A serial control line is formed by the first series of connected circuit boards with a serial control line segment in each circuit board that has a respective first electrical connector at the first edge and a respective second mating electrical connector at the second edge for connection to a respective first electrical connector of another serial control line segment in another circuit board in another valve manifold block of the first fluid valve manifold. The serial control line extends from the first communication module through the first series of connected circuit boards to the second valve driver, and is connected to the second valve driver for actuating the second series of connected circuit boards. Finally, the serial control line is configured to provide a control signal to the second valve driver that controls the voltage to at least one of the plurality of outputs of the second valve driver to control the voltage input to at least one valve unit connected to the second series of connected circuit boards.

Preferably, at least one valve unit that is connected to one of the circuit boards in the second series of connected circuit boards is a proportional valve.

### BRIEF DESCRIPTION OF THE DRAWINGS

Reference now is made to the accompanying drawings in which:
Figure 1 is an exploded side elevational view of a fluid control system, not according to the invention;
Figure 2 is an enlarged side elevational view of one circuit board installed in a manifold block for two valve units as shown in Figure 1, not according to the invention;
Figure 3 is a perspective view of a circuit board for two single solenoid valve units, not according to the invention;
Figure 4 is a perspective view of a circuit board for two double solenoid valve units, not according to the invention;
Figure 5 is a plan view of a first face of the circuit board for two single valve units as shown in Figure 3 illustrating the circuit layout;
Figure 6 is a plan view of a second face of the circuit board for two single valve units as shown in Figure 3 illustrating the circuit layout;
Figure 7 is a schematic end view of a first edge of the circuit board for two single solenoid valve units as shown in Figure 3 illustrating the terminals' connections to respective circuits in the circuit board;
Figure 8 is a schematic end view of a second edge of the circuit board for two single solenoid valve units as shown in Figure 3 illustrating the terminals' connections to respective circuits in the circuit board;
Figure 9 is a schematic view of the detection circuit installed on the first face of the circuit board for two single solenoid valve units as shown in Figure 3;
Figure 10 is a plan view of a first face of the circuit board for two double solenoid valve units as shown in Figure 4 illustrating the circuit layout;
Figure 11 is a plan view of a second face of the circuit board for two double solenoid valve units as shown in Figure 4 illustrating the circuit layout;
Figure 12 is a schematic end view of a first edge of the circuit board for two double solenoid valve units as shown in Figure 4 illustrating the terminals' connections to respective circuits in the circuit board;
Figure 13 is a schematic end view of a second edge of the circuit board for two double solenoid valve units as shown in Figure 4 illustrating the terminals' connections to respective circuits in the circuit board;
Figure 14 is a schematic view of circuit leads connected to the four valves in the two solenoid double valve units for the circuit board shown in Figure 4;
Figure 15 is a schematic view of an alternate embodiment, not according to the invention, between a smart master and smart slave valve device with two coils; and
Figure 16 is a schematic view of an embodiment according to the invention showing a control line extending through a first series of circuit boards to control a second series of circuit boards that can control proportional valves.

### DETAILED DESCRIPTION OF THE PREFERRED EMBODIMENT

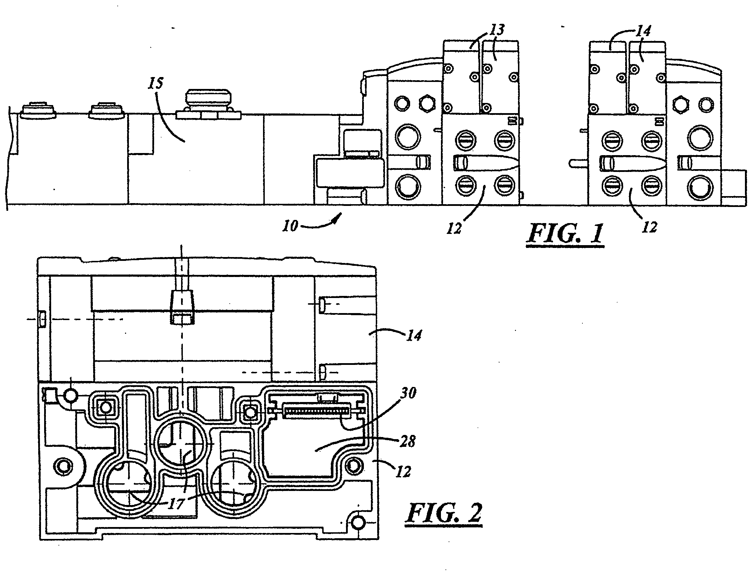

Referring now to Figures 1 and 2, the fluid control system 10 is modular in nature and depending on the application has a varying number of valve manifold blocks 12 interconnected together. Only two manifold blocks 12 are shown for simplicity of the drawings. Some of the valve manifold blocks 12 may have single solenoid valve units 13 mounted thereon and some of the valve manifold blocks 12 may have double solenoid valve units 14 mounted thereon. Sometimes double solenoid valve units are referred to as dual solenoid valves. All blocks 12 are connected to a communication module 15. The manifold block 12 has fluid supply and exhaust ports 17 therethrough that are connected through ports (not shown) that lead to the valve units 13 and 14 to control fluid flow.

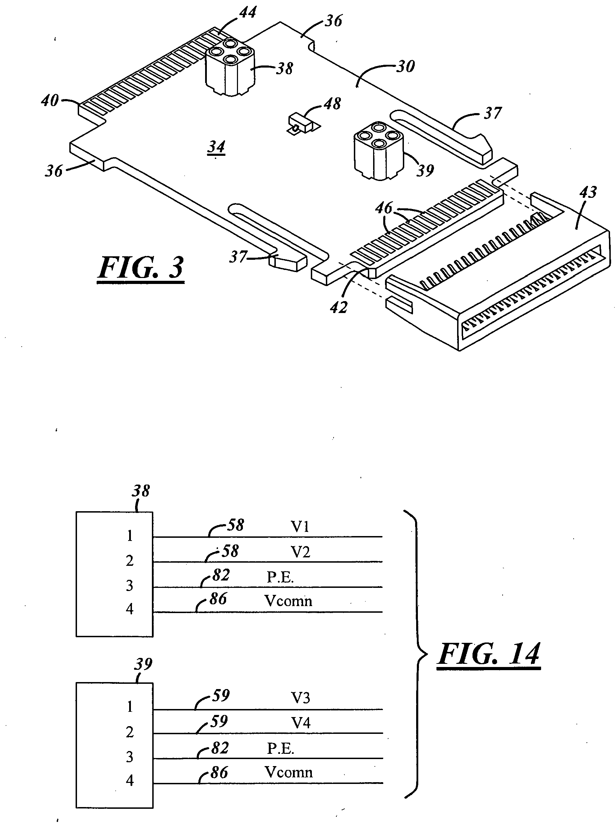

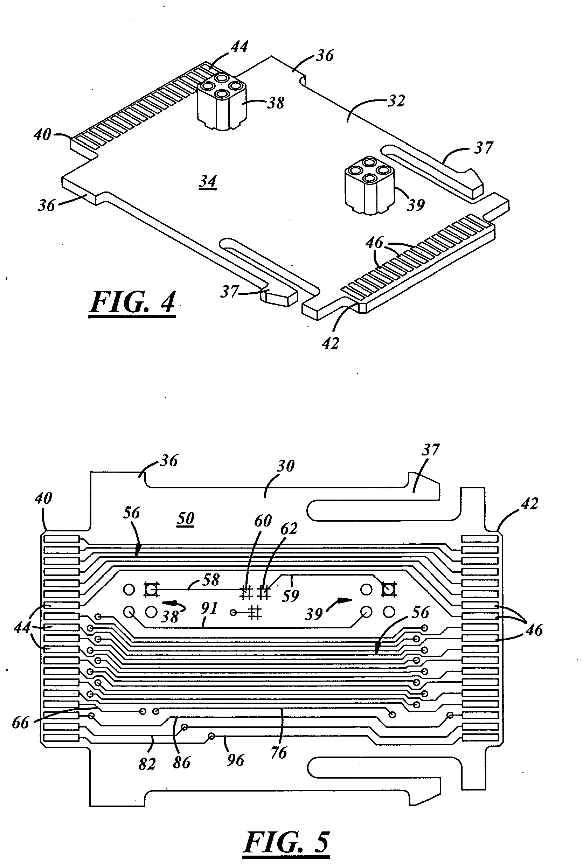

Preferably, each valve manifold block 12 may accommodate two single solenoid valve units 13 or two double solenoid valve units 14. Each valve manifold block 12 has a passage 28 that receives a single circuit board assembly 30 or a double circuit board assembly 32. Referring now to Figures 3 and 4, each circuit board assembly 30 and 32 may have a board 34 with a pair of stop shoulders 36 that engage appropriate shoulders and grooves in the passage 28. Each circuit board may also have a pair of flexible tab arms 37 that also similarly engage the groove in the passage such that the circuit board can be removably installed into the passage 28 by a snap fit.

Each circuit board 30 and 32 has pin connectors 38 and 39 mounted on a respective board 34. Each board has a first edge 40 and second edge 42 with respective trace contacts 44 and 46. As shown in Figure 3, a standard bridge connector 43 electrically connects the aligned trace contacts 44 and 46 of adjacent boards 30. The single board 30 has a diode assembly 48 mounted thereon. Circuit board 32 is absent this diode assembly 48 as illustrated in Figure 4.

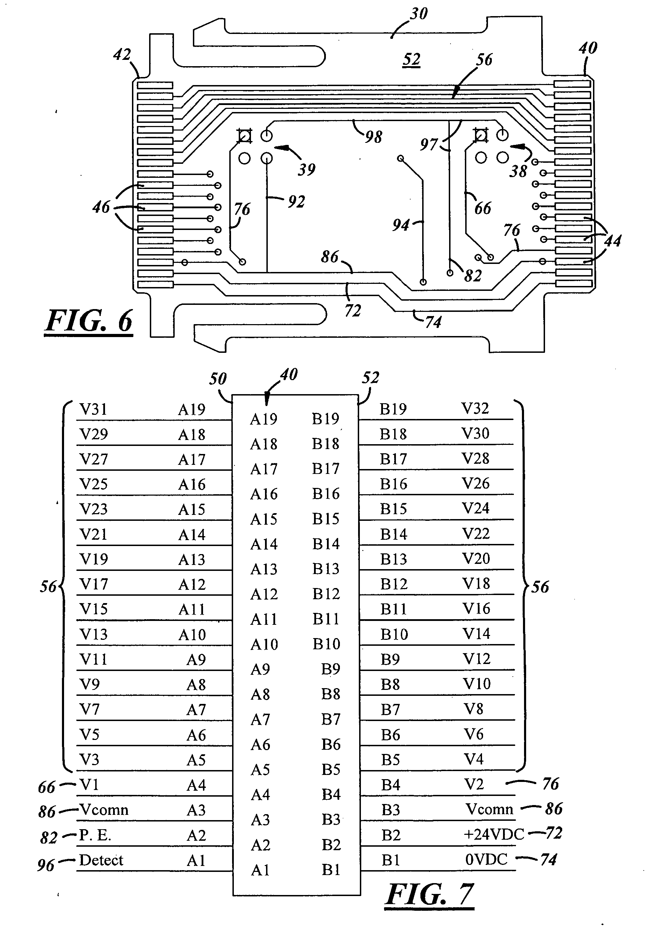

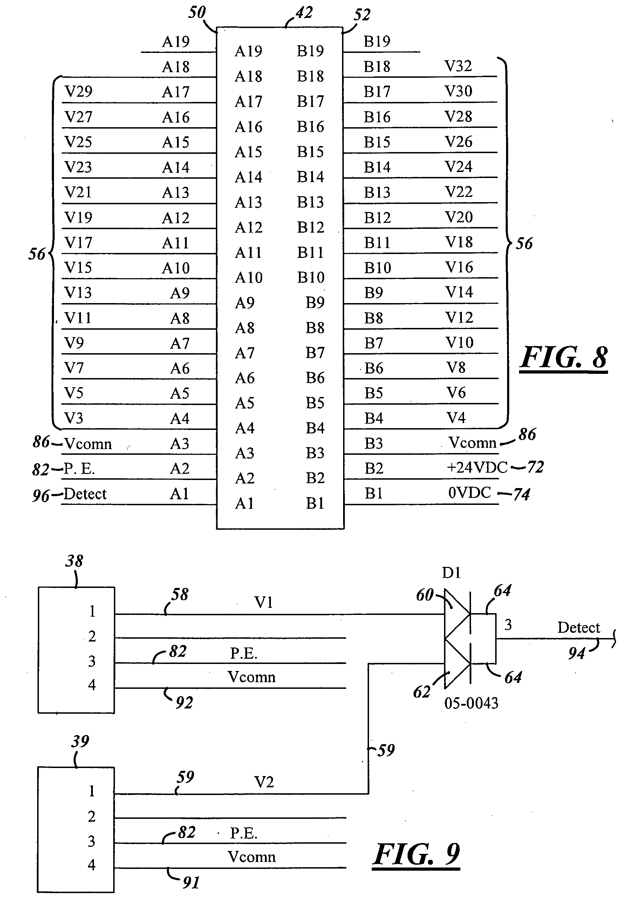

Referring now to Figures 5 through 9, the board 30 as shown in Figure 3 will be described in further detail. The first edge 40 may have trace contacts 44 on both faces 52 and 54 of the board. As shown in Figures 7 and 8 the terms labeled A or B, e.g. A1-A19 and B1-B19 as a prefix refer to the positions of the contacts and conductive lines on the respective side 50 or 52. The terms labeled with the V as a prefix, e.g. V1, V2, etc. refer to the downstream valve number that the circuit operates counting from the shown circuit board. The number notation, e.g. 56, 66 are the conductive printed circuit lines on each board. A set of conductive valve lines 56 labeled V3 through V31 in Figures 7 and 8 on both faces 52 and 54 extend from one edge 40 to the second edge and may be decremented one position from edge 40 to edge 42. For example, on face 50, V3 at position A5 on edge 40 drops one position to position A4 on edge 42 to be connected to a V1 contact at position A4 on edge 40 of a sequential board. On face 52, V4 at position B5 on edge 40 may drop one position to position B4 to be connected to a V2 contact at position B4 of the sequential board. Top contacts at position A19 and B19 are not connected to any conductive lines on the board. In this particular shown circuit board, V31 indicates that the valve manifold using that circuit board is limited to a maximum thirty-one solenoid valves. Other layouts for the circuit board lines are possible to arrange for less or for more solenoid valves.

At first edge 40, the conductive valve line 66 corresponding to position A4 and operating the first valve V1, i.e. the valve on the present manifold block 12 leads to pin connector 38. Another conductive valve line 76 corresponding to position B4 and operating the second valve, i.e. the second single solenoid valve on the present manifold block 12 leads to pin connector 39. The pin connectors 38 and 39 are connected to the respective valve units 13. Each valve solenoid unit 13 is also respectively connected to pin connectors 38 and 39 which are connected to legs 91 and 92 that lead to a conductive common line 86 labeled Vcomn at each face 52 and 54. The Vcomn lines 86 at each face are connected to each other. The Vcomn lines 86 are normally connected to a 24 volt supply to power all of the valve units 12 and 13.

Conductive lines 56 and 66 corresponding to V1 and V2 also both have legs 58 and 59 leading to a respective diode 60 and 62 in diode assembly 48. Each diode has its output connected to a leg 64 as clearly shown in Figure 9 that connects to a leg 94 that leads to a detection circuit line 96 that extends from edge 40 to 42 at positions A1 and A1 at each edge. This detection line 96 as well as the conductive common line 86 labeled Vcomn are not decremented but pass straight through from one edge to the other without dropping any positions. Other lines such as an auxiliary power circuit lines 72 labeled 24VDC at position B2 and its return line 74 labeled 0VDC at B1 as well as a protective earth line 82 labeled PE and often referred to as a ground at position A2 may also pass straight through without any decrementation of position. Legs 97 and 98 connect line 82 to the respective connector pins 38 and 39.

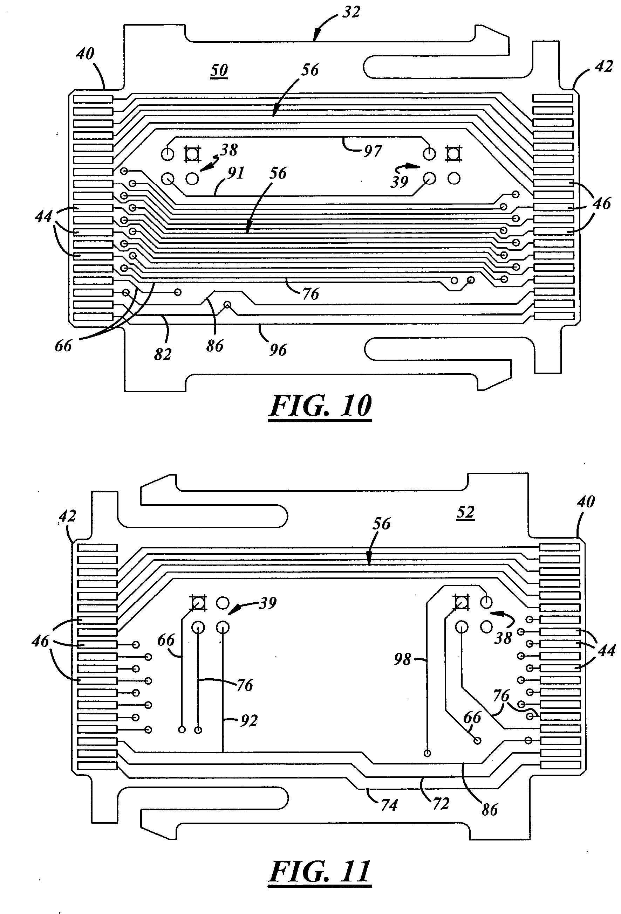

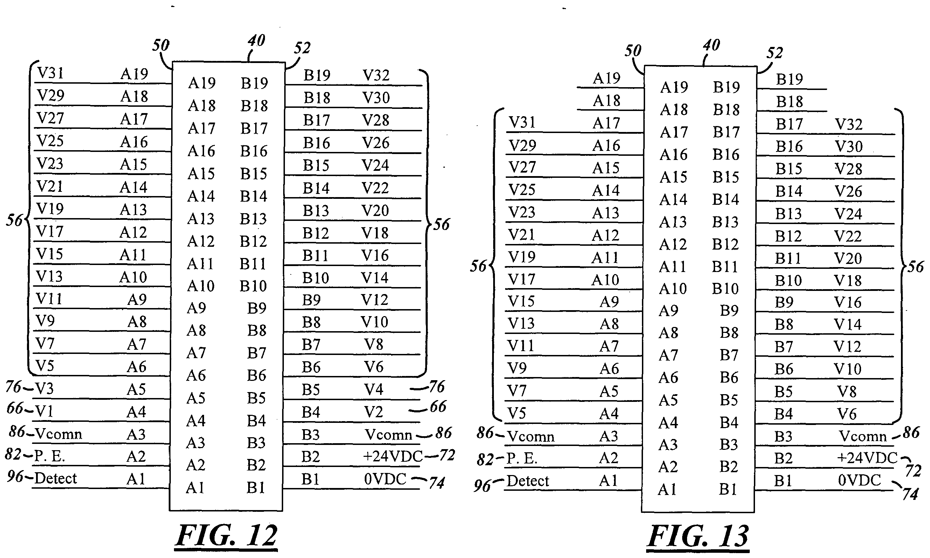

Referring now to Figures 10-14, the double circuit board 32 is constructed to mount two double solenoid valve units. Similar or corresponding part numbers from the board 30 will have corresponding similar numbers. As such, a set of conductive valve lines 56 labeled particularly V5 through V32 at edge 40 corresponding to position A6-A19 on face 50 and positions B6-B19 on face 52 pass to edge 42 and are decremented two positions i.e. to positions A4-A17 on face 50 and B4-B17 on face 52 such that they connect to corresponding positions on a sequential board. At edge 42, contacts A19 and A18 on face 52 and B19 and B18 are not connected to any conductive lines on the double board 32.

The board 32 has conductive valve lines 66 for V1 and V2 connected to pin connector 38 and conductive valve lines 76 for V3 and V4 are connected to pin connector 39 to power the two double solenoid valve units 14. Similar to the single circuit board 30, the double board 32 has a conductive common line 86 labeled Vcomn at each face 50 and 52 to power all the valve units, detection line 96, auxiliary power circuit lines 72 labeled 24 VDC and its return line 74 at OVDC, and protective earth line 82 PE or ground line that are not decremented. The detection line 96 at position A1 is not connected to the connectors 38 or 39 or the double valve units associated with this double circuit board 32.

In this valve operation, there is a sinking driver, i.e. power line which is supplied to along conductive common line 86 which is connected to all solenoids. In order to actuate the valve, each line 56, 66, or 76 must individually be grounded. This is usually done through an IC chip or driver at the end of the line, e.g. at the communication module 15 and connected to all of the conductive lines 56, 66 and 76. When a selected line is grounded, electrical current is then able to flow from the conductive common line 86 labeled Vcomn and through the selected solenoid and to ground to actuate an individual valve V1-V32. However, it is also foreseen that a sourcing driver can also work, i.e. a grounding common is connected to all solenoids and to actuate a valve, a voltage, for example 24 V is individually connected.

The detection line 96 can be used to determine if the circuit board is a single board 30 or a double board 32. In one method, all the conductive valve lines 56, 66, and 76 are actuated. In the shown system, this actuation is done by grounding the valve lines V1-V32 through an IC component or driver connected at one end from the first board. The conductive common line 86 Vcomn is then able to provide current through each solenoid and down through the individual lines V1-V32. In operation, all the solenoid valves are actuated and the V1-V32 lines are grounded, thus the voltage detected on the detection line 96 is 0 V.

Each contact is selectively and individually deactuated, i.e. turned off in sequence by the driver IC circuit usually housed in communication module 15. When the V1 line in the shown circuit board 30 is turned off, the V1 line is no longer grounded so V1 line reads 24 V, in other words it now has the same voltage as the Vcomn line. The leg 58 which is directly connected to the V1 line also reads 24 V and passes through the diode 60 as shown in Figure 9 to outlet leg 94 on the circuit board which connects to the detection line 96. The detection line 96 then reads 24 V.

The V1 line is then re-actuated, and the V2 line is deactuated. Similarly, the V2 line will then read 24 V when the V2 line is deactuated. The detection leg 94 downstream of diode 62 again reads 24 V. Thus, when V1 and V2 lines both are sequentially deactuated and the detection lines reads 24 V for both deactuations, it is thus determined that the circuit board associated with V1 and V2 for this board is a single solenoid circuit board 30.

On the other hand, if the four voltage lines i.e. V1-V4 of double board 32 are actuated and deactuated in sequence, the detection line 96 as shown in Figure 14 does not change from its 0 V readout, because it is not connected to any of line V1-V4 on this double board 32. Thus, when the detection circuit line reads 0 V when the fours lines V1-V4 are sequentially actuated and deactuated, it can be deduced that the circuit board associated with these four valve lines is with a double solenoid board 32.

The process of the driver sinking (or sourcing) the voltage charge for this detection is very fast, so as not to change the position of the valve. For example, a sinking pulse or strobe connected by the driver to 0 V can be 0.2 milliseconds. This is substantially too short to mechanically move the valve from its previous position. Furthermore, when the strobe is sent to valve status V1, none of the other valve lines V2-V32 are affected, because they did not receive this strobe.

Other logical mapping and communications can be used with this single detection line 96 that passes through all the circuit boards 30 and 32. For example, if only one-line V2 reads 24 V when deactuated but V1 remains at 0 V when deactuated, it may be deduced that there is no coil or solenoid valve in the valve unit associated with V1.

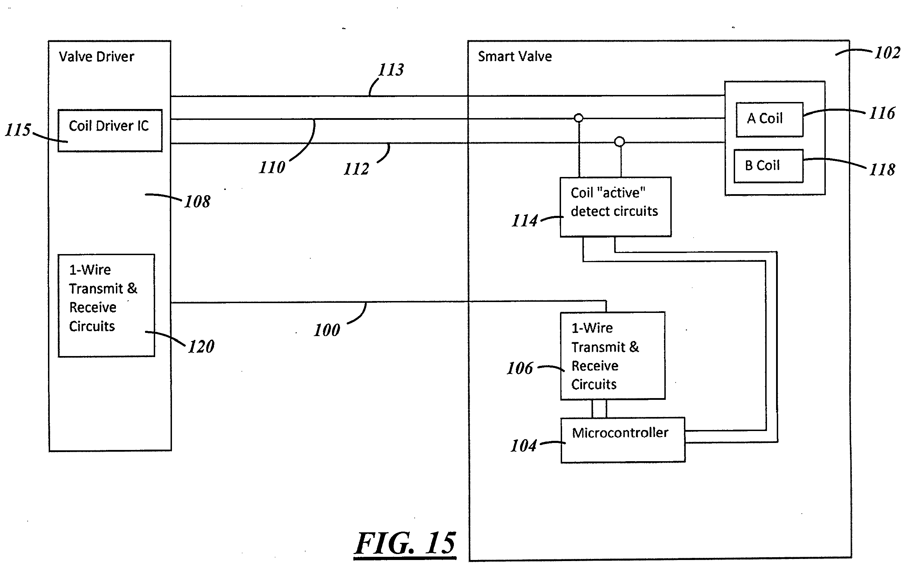

It is also foreseen that instead of or in addition to a detection line, a single serial communication line may be used in other embodiments and for other purposes than detecting the presence of single and double solenoid circuit boards and the presence or absence of single or double solenoid valve units mounted on the valve manifold units of a fluid control system. Referring now to Figure 15, a serial communication line 100 can be used with smart slave devices, e.g. smart valves 102 with its own serial controller 104 and transmitting and receiving circuit 106 as shown in Figure 15. These other purposes for example can be counting the number of actuations or having other communication signals emanating from the individual valve units and sent through the serial communication line 100 to be received to a processor or other communication device, e.g. communication module 15, at the end of the line, programming or parameterization functionality.

In an alternative embodiment, not covered by the claims, in order to transmit data from the driver master 108 to the slave (valve) on the same connecting trace 100 that is also used to power the electronic circuitry and micro controller 104, the master device 108 modulates the current to create voltage pulses that are greater than the bias potential allowing the slave device to identify that the data is coming from the master driver. The slave can only respond to a master's request or command, it cannot initiate communication. When responding to a master's request, the slave modulates the current to the single wire trace 100 in order to create voltage pulses that are less than the bias potential, allowing the master to identify that data is coming back from the slave.

This handshaking routine is comprised of data frames which consist of a start bit, 8 data bits and one stop bit. The complete data frame consists of 8 bytes, an address byte, a command byte, five data bytes and one checksum byte. The checksum byte is simply the sum of the preceding seven bytes and is used for error detection.

Circuitry 106 and 104 on the slave valve is able to decode these data pulses for parameter and/or diagnostic functions.

Addressing the slaves is required since the single wire communication trace is connected to the entire set of 32 valves. Thus, it is important to identify which slave valve is being addressed. This addressing function for each smart valve is done on initial power-up, or is initiated by the user when appropriate, and is achieved by the utilization of the existing "coil output" signals which are typically used to energize solenoid coils of conventional valves.

Upon power-up, the "coil output" signals are configured to sequentially strobe each coil trace 110 and 112 with a very fast pulse from coil driver 115, which is too fast to energize the coil 116, 118 of an attached valve 102. The common voltage is along line 113. A detect circuit 114 in the slave is then triggered by the strobe pulse to allow that specific slave to receive an address.

Once the first slave obtains an address from the master, the strobing sequence is incremented so the next slave can be assigned sequential addresses. The system continues this addressing routine until all 32 possible slaves are assigned a sequential address. After all slaves are addressed, the master can communicate to each individual slave without affecting any other slave's function. Because each of the slaves receives a sequential address (1-32), the smart driver can then communicate with each slave individually at any time during operation. Smart slaves may be mixed on the same manifold with regular (Non-smart) valves.

Each of the smart valves (slaves) connected to the one wire is able to communicate with the smart driver through its transmit and receive circuit 120. Commands and data are sent from the smart driver to the smart slaves along line 100. Data and slave type is sent from the smart slaves to the smart driver along line 100.

One function that the smart valve may have is counting the number or times it has been energized. The smart valves will detect the activation of both the "A" and "B" coils 116, 118 and will record the total counts into non-volatile memory located on the smart valve circuitry. Additional slave types such as "smart pressure transducer" (Detect and report air pressure) or "smart pressure regulator" (regulate air pressures) are also possible.

In this fashion, communication through the valve manifold block assembly of a fluid control system is achieved by using a single serial communication line that is in direct contact with individual valve units throughout the manifold block assembly.

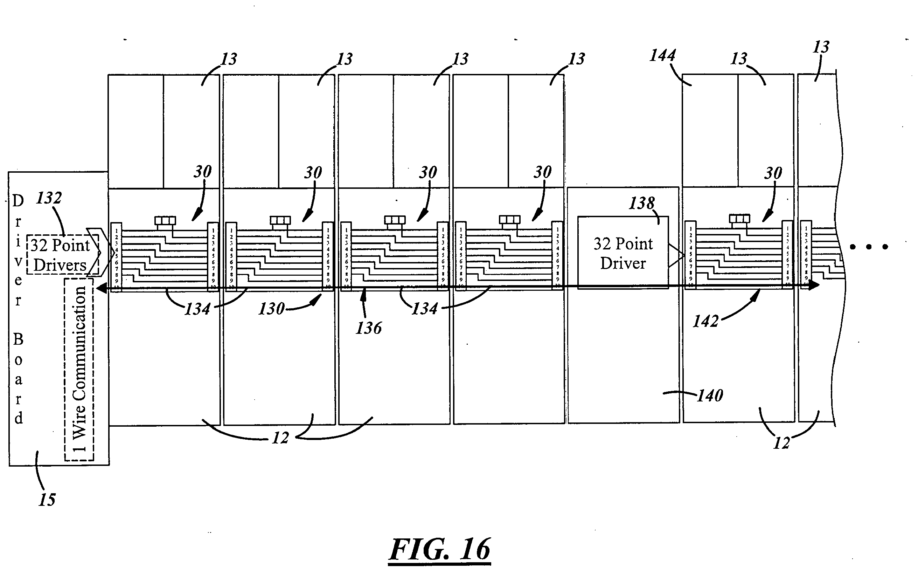

In another embodiment, according to the invention and shown in figure 16, a first series 130 of circuit boards 30, each circuit board being in a respective manifold block 12, is operably connected to a first driver 132 installed in communication module 15. Each circuit board 30 shown in figure 16 in each manifold block 12 is operably connected to a respective valve unit 13 as described before. Each circuit board 30 has a control line segment 134 that similarly extends from edge to edge in similar fashion to detection line 96 as previously described by not being decremented but passing straight through from one edge to the other without dropping any positions. The segments 134 are joined together to form a control line 136 that extends from the main communication module 15 to a second driver unit 138 in a second communication module 140. The second driver unit 138 is then connected in similar fashion to a second series 142 of circuit boards 32.

The control line 136 by being connected to a second communication module 140 with its own driver 138 allows the fluid control system 10 to be longer and with more valve stations than what the original design capacity of either driver 132 or the first series 130 of circuit boards 30 dictated. Furthermore, the control line 136 may provide a control signal to the second driver unit 138 that proportionally controls the input voltage to a valve unit 13. In this fashion, one of the valve units 13 connected to the second series 142 of circuit boards may be a proportioning valve (indicated at 144) or other voltage dependent valve that is actuated through respective circuit board with variable voltage. For example, the control input voltage may vary between 0 - 10 volts to provide adjustable output pressure between 0 - 6,89 bar [0 - 100 PSI]. While only one proportioning valve 144 is shown in Figure 16, for simplicity of the drawings, the other valve units 13 in the second series 142 may incorporate a plurality of proportioning valves 144.

A fluid control system has a first series of connected circuit boards that each actuate a respective valve unit mounted to a valve manifold block. A first communication module has a valve driver with a plurality of outputs for actuating the valve units connected to the first series of connected circuit boards. A serial control line extends through the first series of connected circuit boards and is connected to a second driver for actuating a second series of connected circuit boards.

Other variations and modifications are possible without departing from the scope of the present invention as defined by the appended claims.

## Claims

1. A fluid control system (10), comprising:
a first fluid valve manifold having a plurality of valve manifold blocks (12) fastened to each other so as to form fluid pathways (17) extending through said first fluid valve manifold and a passage (28) through each valve manifold block (12) of said first fluid valve manifold that aligns with each other to collectively form a continuous electrical conduit receiving a first series (130) of connected circuit boards (30) that each actuate a respective valve unit (13) mounted to each valve manifold block (12) of said first fluid valve manifold;
a second fluid valve manifold having a plurality of valve manifold blocks (12) fastened to each other so as to form fluid pathways (17) extending through said second fluid valve manifold and a passage (28) through each valve manifold block (12) of said second fluid valve manifold that aligns with each other to collectively form a continuous electrical conduit receiving a second series (142) of connected circuit boards (30) that each actuate a respective valve unit (13, 144) mounted to each valve manifold block (12) of said second fluid valve manifold;
each circuit board (30) having a set of conductive valve lines (56) connected to and extending between a respective set of first electrical connectors (44) at a first edge thereof and a respective set of second mating electrical connectors (46) at a second edge thereof opposite from said first edge;
a first communication module (15) having a first valve driver (132) with a plurality of outputs for actuating the respective valve units (13) connected to said first series (130) of connected circuit boards (30);
a conductive common line (86) connected to one voltage side of a respective first electrical connector (44) and respective second mating electrical connector (46) for connection to a respective conductive common line (86) in another valve manifold block (12);
a second communication module (140) having a second valve driver (138) with a plurality of outputs for actuating the respective valve units (13, 144) connected to said second series (142) of connected circuit boards (30);
said first series (130) of connected circuit boards (30) being operably connected to said first valve driver (132), said second valve driver (138) being connected to said second series (142) of connected circuit boards (30);
wherein a serial control line (136) is formed by said first series (130) of connected circuit boards (30) with each circuit board (30) having a line segment (134) having a respective first electrical connector (44) at said first edge and a respective second mating electrical connector (46) at said second edge for connection to a respective first electrical connector (44) of another line segment (134) in another circuit board (30) in another valve manifold block (12) of said first fluid valve manifold; and
said serial control line (136) extending from said first communication module (15) through said first series (130) of connected circuit boards (30) to said second valve driver (138), said serial control line (136) being connected to said second valve driver (138) for actuating said second series (142) of connected circuit boards (30), wherein said serial control line (136) is configured to provide a control signal to said second valve driver (138) that controls the voltage to at least one of the plurality of outputs of said second valve driver (138) to control the voltage to at least one valve unit (13, 144) connected to said second series (142) of connected circuit boards (30).

2. A fluid control system (10) according to claim 1, wherein at least one valve unit connected to one of the circuit boards (30) in the second series (142) of connected circuit boards (30) is a proportional valve (144).

## Patentansprüche

1. Fluidsteuersystem (10), umfassend:
einen ersten Fluidventilverteiler mit einer Mehrzahl von Ventilverteilerblöcken (12), die so aneinander befestigt sind, dass sie Fluidwege (17) bilden, die sich durch den ersten Fluidventilverteiler erstrecken, und einem Durchgang (28) durch jeden Ventilverteilerblock (12) des ersten Fluidventilverteilers, die miteinander fluchten, um gemeinsam einen durchgehenden elektrischen Kanal zu bilden, der eine erste Reihe (130) verbundener Platinen (30) aufnimmt, welche jeweils eine entsprechende Ventileinheit (13) betätigen, die an jedem Ventilverteilerblock (12) des ersten Fluidventilverteilers angebracht ist;
einen zweiten Fluidventilverteiler mit einer Mehrzahl von Ventilverteilerblöcken (12), die so aneinander befestigt sind, dass sie Fluidwege (17) bilden, die sich durch den zweiten Fluidventilverteiler erstrecken, und einem Durchgang (28) durch jeden Ventilverteilerblock (12) des zweiten Fluidventilverteilers, die miteinander fluchten, um gemeinsam einen durchgehenden elektrischen Kanal zu bilden, der eine zweite Reihe (142) verbundener Platinen (30) aufnimmt, welche jeweils eine entsprechende Ventileinheit (13, 144) betätigen, die an jedem Ventilverteilerblock (12) des zweiten Fluidventilverteilers angebracht ist;
wobei jede Platine (30) einen Satz leitender Ventilleitungen (56) aufweist, die mit einem jeweiligen Satz erster elektrischer Verbinder (44) an einem ersten Rand davon und einem jeweiligen Satz zweiter elektrischer Gegenverbinder (46) an einem zweiten Rand davon gegenüber dem ersten Rand verbunden sind und sich zwischen diesen erstrecken;
ein erstes Kommunikationsmodul (15), das einen ersten Ventiltreiber (132) mit einer Mehrzahl von Ausgängen zum Betätigen der jeweiligen Ventileinheiten (13) aufweist, die mit der ersten Reihe (130) der verbundenen Platinen (30) verbunden sind;
eine leitende Sammelleitung (86), die mit einer Spannungsseite eines jeweiligen ersten elektrischen Verbinders (44) und eines jeweiligen zweiten elektrischen Gegenverbinders (46) zur Verbindung mit einer jeweiligen leitenden Sammelleitung (86) in einem anderen Ventilverteilerblock (12) verbunden ist;
ein zweites Kommunikationsmodul (140) mit einem zweiten Ventiltreiber (138) mit einer Mehrzahl von Ausgängen zum Betätigen der jeweiligen Ventileinheiten (13, 144), die mit der zweiten Reihe (142) der verbundenen Platinen (30) verbunden sind;
wobei die erste Reihe (130) der verbundenen Platinen (30) betriebsfähig mit dem ersten Ventiltreiber (132) verbunden ist, wobei der zweite Ventiltreiber (138) mit der zweiten Reihe (142) der verbundenen Platinen (30) verbunden ist;
wobei eine serielle Steuerleitung (136) durch die erste Reihe (130) der verbundenen Platinen (30) gebildet ist, wobei jede Platine (30) ein Leitungssegment (134) mit einem jeweiligen ersten elektrischen Verbinder (44) an dem ersten Rand und einem jeweiligen zweiten elektrischen Gegenverbinder (46) an dem zweiten Rand zur Verbindung mit einem jeweiligen ersten elektrischen Verbinder (44) eines anderen Leitungssegments (134) in einer anderen Platine (30) in einem anderen Ventilverteilerblock (12) des ersten Fluidventilverteilers aufweist; und
wobei die serielle Steuerleitung (136) sich von dem ersten Kommunikationsmodul (15) durch die erste Reihe (130) der verbundenen Platinen (30) zu dem zweiten Ventiltreiber (138) erstreckt, wobei die serielle Steuerleitung (136) mit dem zweiten Ventiltreiber (138) zum Betätigen der zweiten Reihe (142) der verbundenen Platinen (30) verbunden ist, wobei die serielle Steuerleitung (136) so konfiguriert ist, dass sie ein Steuersignal an den zweiten Ventiltreiber (138) liefert, welches die Spannung an mindestens einem der mehreren Ausgänge des zweiten Ventiltreibers (138) steuert, um die Spannung an mindestens einer Ventileinheit (13, 144) zu steuern, die mit der zweiten Reihe (142) der verbundenen Platinen (30) verbunden ist.

2. Fluidsteuersystem (10) nach Anspruch 1, wobei mindestens eine Ventileinheit, die mit einer der Platinen (30) in der zweiten Reihe (142) der verbundenen Platinen (30) verbunden ist, ein Proportionalventil (144) ist.

## Revendications

1. Système de commande de fluide (10), comprenant :
un premier collecteur de soupape de fluide ayant une pluralité de blocs de collecteur de soupape (12) fixés les uns aux autres de manière à former des voies de passage de fluide (17) s'étendant à travers ledit premier collecteur de soupape de fluide, et un passage (28) à travers chacun des blocs de collecteur de soupape (12) dudit premier collecteur de soupape de fluide qui s'alignent les uns avec les autres pour former collectivement une conduite électrique continue recevant une première série (130) de cartes de circuit imprimé (30) connectées qui actionnent chacune une unité de soupape (13) respective montée sur chaque bloc de collecteur de soupape (12) dudit premier collecteur de soupape de fluide ;
un deuxième collecteur de soupape de fluide ayant une pluralité de blocs de collecteur de soupape (12) fixés les uns aux autres de manière à former des voies de passage de fluide (17) s'étendant à travers ledit deuxième collecteur de soupape de fluide, et un passage (28) à travers chacun des blocs de collecteur de soupape (12) dudit deuxième collecteur de soupape de fluide qui s'alignent les uns avec les autres pour former collectivement une conduite électrique continue recevant une deuxième série (142) de cartes de circuit imprimé (30) connectées qui actionnent chacune une unité de soupape (13, 144) respective montée sur chaque bloc de collecteur de soupape (12) dudit deuxième collecteur de soupape de fluide ;
chaque carte de circuit imprimé (30) ayant au niveau d'un premier bord de celle-ci un ensemble de lignes de soupape conductrices (56) connectées à un ensemble respectif de premiers connecteurs électriques (44) et s'étendant entre ces derniers, et ayant au niveau d'un deuxième bord de celle-ci, opposé audit premier bord, un ensemble respectif de deuxièmes connecteurs électriques (46) appariés ;
un premier module de communication (15) ayant un premier pilote de soupape (132) avec une pluralité de sorties pour actionner les unités de soupape (13) respectives connectées à ladite première série (130) de cartes de circuit imprimé (30) connectées ;
une ligne commune conductrice (86) connectée à un côté de tension d'un premier connecteur électrique (44) respectif et d'un deuxième connecteur électrique (46) apparié respectif pour la connexion à une ligne commune conductrice (86) respective dans un autre bloc de collecteur de soupape (12) ;
un deuxième module de communication (140) ayant un deuxième pilote de soupape (138) avec une pluralité de sorties pour actionner les unités de soupape (13, 144) respectives connectées à ladite deuxième série (142) de cartes de circuit imprimé (30) connectées ;
ladite première série (130) de cartes de circuit imprimé (30) connectées étant connectée de manière opérationnelle audit premier pilote de soupape (132), ledit deuxième pilote de soupape (138) étant connecté à ladite deuxième série (142) de cartes de circuit imprimé (30) connectées ;
dans lequel une ligne de commande série (136) est formée par ladite première série (130) de cartes de circuit imprimé (30) connectées, chaque carte de circuit imprimé (30) ayant un segment de ligne (134) ayant un premier connecteur électrique (44) respectif au niveau dudit premier bord et un deuxième connecteur électrique (46) apparié respectif au niveau dudit deuxième bord pour la connexion à un premier connecteur électrique (44) respectif d'un autre segment de ligne (134) dans une autre carte de circuit imprimé (30) dans un autre bloc de collecteur de soupape (12) dudit premier collecteur de soupape de fluide ; et
ladite ligne de commande série (136) s'étendant dudit premier module de communication (15) à travers ladite première série (130) de cartes de circuit imprimé (30) connectées audit deuxième pilote de soupape (138), ladite ligne de commande série (136) étant connectée audit deuxième pilote de soupape (138) pour actionner ladite deuxième série (142) de cartes de circuit imprimé (30) connectées, dans lequel ladite ligne de commande série (136) est configurée pour fournir un signal de commande audit deuxième pilote de soupape (138) qui commande la tension à au moins une de la pluralité de sorties dudit deuxième pilote de soupape (138) pour commander la tension au niveau d'au moins une unité de soupape (13, 144) connectée à ladite deuxième série (142) de cartes de circuit imprimé (30) connectées.

2. Système de commande de fluide (10) selon la revendication 1, dans lequel au moins une unité de soupape connectée à une des cartes de circuit imprimé (30) de la deuxième série (142) de cartes de circuit imprimé (30) connectées est une soupape proportionnelle (144).
